# EUROPEAN PATENT SPECIFICATION

(11) **EP 1 401 786 B1**
(45) Date of publication and mention of the grant of the patent: **11.04.2007**
(21) Application number: 02741176.8
(22) Date of filing: 14.06.2002
(51) Int. Cl.: C04B 40/04

(54) **IMPROVED METHOD FOR PRODUCING SLABS OF MARBLE CONGLOMERATE**
VERBESSERTES VERFAHREN ZUR HERSTELLUNG VON PLATTEN AUS EINER MARMOR-HALTIGEN ZUSAMMENSETZUNG
PROCEDE AMELIORE SERVANT A PRODUIRE DES DALLES EN AGGLOMERE DE MARBRE

(30) Priority: 04.07.2001 IT RM20010390
(43) Date of publication of application: 31.03.2004
(73) Proprietor: Brutti, Franco, 37128 Verona (IT)
(72) Inventor: Brutti, Franco, 37128 Verona (IT)
(74) Representative: Iannone, Carlo Luigi
(86) International application number: PCT/IT2002/000395
(87) International publication number: WO 2003/004440

(56) References cited:
- DE-A- 4 334 730
- GB-A- 1 106 955
- US-A- 4 085 246
- US-A- 4 732 816

## Description

The present invention concerns a process for the production of slabs of marble conglomerate.

More specifically, the invention refers to the field of the production of marble conglomerate slabs starting from marble sand and/or granulate, additivated with dyes and binders, such as curing resins, generally styrene based resins.

The production process of marble conglomerate slabs of the present invention, employs systems essentially comprised of a specific conveyor belt on which the working material, i.e. marble sand and/or granulate along with the chemical binder, is placed, of a compaction system and of a subsequent hardening system.

According to said process, material is placed on the conveyor belt by containment shape, to create slabs having variable sizes in width, length and thickness. These slabs are pressed under vacuum or within controlled atmosphere, while are maintained under vibration (vibro-compaction) for a time included between 50 and 90 seconds and then introduced within an oven wherein, with temperatures ranging between 80°C and 120°C, for a period ranging between 30 and 40 minutes, in function of the thickness of the slabs and the kind of material, the slabs are hardened by polymerisation of the resin comprising the binder.

Once hardened, the slab exits from the oven and is subjected to final workings, such as squaring, trimming, gauging and polishing, that will give to the product the final aspect of real marble.

The drawback of this kind of process is that, to avoid the dirtying of the apparatuses of the system by the worked materials, particularly gluing materials, it is necessary to protect said apparatuses from the direct contact with the binding resin.

In the old systems, this problem was faced by using super-calendered paper, in such a way that, during the vibro-compaction, binding resin is not in direct contact with the conveyor belt or with presses. Paper, provided both above and under the slab, prevented transudations of resin over the rubber, and the following transfer within a plane oven occurred without gluing problems between the slab and the conveyor belt, and then between the slab and the planes of the same oven.

However, the problem of the gluing was not completely solved, since the slab remained in any case glued to the paper sheets placed above and under the same slab.

Once the slab is hardened, when the two paper sheets are removed from the same slab, for example by mechanical abrasion process and by the help of water jets, paper residuals entered in circulation in the working waters, creating big problems for the final disposal.

Afterwards (Italian Patent Application N° VR99U000073, filed by the same Applicant), in order to solve this problem, plasticised papers have been introduced, comprised of polypropylene, that, at the exit of the ovens, were easily detached from the same slab.

According to other development trends of the technology, it has been introduced the use of rubber sheets and moulds, the sheet being tearing detachable at the end of the working process.

A further improvement in the process using rubber sheets and moulds, in order to prevent a too fast deterioration of the same sheets, due to the action of the styrene based binder on the rubber, provides the spraying on said sheets or moulds a detaching agent comprising an aqueous solution of polyvinyl alcohol (PVA) and glycerine (Italian patent application n° TV99A000094).

Said solution must be perfectly dried before pouring the mixture comprised of the aggregates and the binder on the sheets or on the same moulds, in this way making water evaporating and letting a perfectly dry layer of polyvinyl alcohol and glycerine on the moulds. In order to avoid an unacceptable expansion of the production time, said evaporation is carried out within a tunnel at about 400°C.

The presence of humidity residuals on the moulds is absolutely not tolerated since, during the following polymerisation of the slab binder within an oven at 120°, the evaporation of the water would create absolutely unacceptable craters and defects on the same slab.

What is necessary as essential trick for the good outcome of the production process according to this solution has some drawbacks involving a high wearing of the sheets or rubber moulds.

In fact, during the spaying operation of the polyvinyl alcohol and glycerine water solution, carried out at room temperature, sheets or rubber moulds are at a temperature of about 20 - 25°C, afterwards increased up to about 400°C, during the humidity removal phase, to be then reduced again up to room temperature when the material for the production of the slabs is poured above the sheets or rubber moulds.

Afterwards, sheets or moulds are introduced within the oven at 120°C, to promote the polymerisation of the binder, and the rubber comprising the same is again subjected to high temperatures, to go back again at room temperature after the extraction of the slabs and for the following use in a new production cycle.

These continuous temperature variations deteriorate the rubbers comprising sheets and moulds more quickly than it is wished, remarkably reducing the useful life of the same as far as the number of allowed moulding is concerned.

In this contest it is introduced the solution according to the present invention, aiming to provide a process that, in view of the elimination of the use of rubber sheets and of the aqueous solution of polyvinyl alcohol and glycerine, eliminates the drawbacks due to the removal of the water from the mould surface, avoiding that the same are subjected to excessive thermal variations.

These and other results are obtained according to the present invention, suggesting the use of a hydrosoluble material protective film, preferably based on polyvinyl alcohol, placed in direct contact with the two faces of the pre-shape that, after vibro-compaction and polymerisation, will comprise the slab, in such a way to avoid the direct contact between materials of the pre-shape and the system apparatuses.

In view of its features, the hydrosoluble material film is then eliminated, without being necessary to adopt particular tricks to this end, during the finishing phases of the slab, which employs a large amount of water.

Furthermore, the film allows, once applied, to work employing moulds comprised of materials different from the rubber.

It is therefore specific object of the present invention a process for the production of marble conglomerate slabs, starting from marble sand and/or granulates, additivated with binders, of the kind comprising a step of mixing the raw materials, a step of placing the mixture on a conveyor belt or on moulds, a under vacuum vibro-compaction step and a following step of polymerisation of the binder, plus possible further lapping and finishing steps of the final product, further comprising a step of placing a protective sheet on said conveyor belt or on base of said moulds, before pouring the mixture, and on said mixture, after having poured the same and before covering the mixture with the possible lid of the mould, or in any case before subjecting to the vibro-compaction, said protective sheet being comprised of hydrosoluble plastic material in such a way to coat the mixture above and at the bottom, before the vibro-compaction step, said hydrosoluble material sheet being automatically removed, after the binder polymerisation step, from the water of the slab finishing workings.

More particularly, according to the present invention, said hydrosoluble material sheet is comprised of a polyvinyl alcohol based thermoplastic material.

In detail, according to the invention, said process for the production of marble conglomerate slabs comprises the following steps:
- mixing the raw materials;
- placing a hydrosoluble material sheet on the moulds transported on a conveyor belt or directly on the conveyor belt,
- placing a raw material mixture layer having an homogeneous thickness on the hydrosoluble material sheet beforehand arranged,
- placing a further hydrosoluble sheet on the mixture;
- possible covering of the mixture by the mould lid;
- under vacuum vibro-compaction of the mixture,
- polymerisation of the binder by passage in an oven at temperatures ranging between 80° and 120° C,
- cooling the slabs up to room temperature, and
- finishing of the slabs in presence of water, with consequent removal by dissolution of hydrosoluble plastic material protection sheets.

Particularly, according to the present invention, all the steps are carried out with temperatures included between the room temperature and the maximum temperature reached within the oven during the polymerisation step.

Further, according to the invention, the basis of the moulds that are eventually used can include raised edges having such a measure to correspond to the wished thickness of the produced slabs.

The solution according to the present invention allows reaching some remarkable advantages.

Main advantage surely is the prolongation of the useful life of the rubber moulds. In fact, eliminating the passage within the tunnel at about 400°C, temperatures to which the fixtures are subjected during the process vary within a range between the room temperature and the temperature within the oven (in any case never higher than 120°C).

Among further advantages, first of all a higher application simplicity is obtained. In fact, according to the process employing aqueous solutions of polyvinyl alcohol and glycerine, different components are used that must be mixed and diluted within a suitable mixing apparatus, spay applied on the moulds and then subjected to the temperature of about 400°C to allow the water evaporation. These passages are not necessary in the process according to the present invention and consequently the relevant apparatuses are not necessary, said apparatuses being particularly expensive and bulky, and require a large amount of electrical power.

Simplification of the process involves remarkable economical advantages also under the managing cost point of view, beside the advantages deriving to this end from the elimination of the tunnel operating at about 400°C; it should be taken into consideration that, according to the process now overcomed by the present invention, an amount of dry substance of about 30 g/m² per 10m² (between mould and lid) was sprayed, which means that about 300 g were required, and that even 1200 g of H₂O were to be evaporated within no more than 1 minute for each slab. Taking into consideration systems producing a high number of slabs, a further problem is due to the consequent rising of the humidity levels within the working environment.

Also about the working time, the process according to the present invention allows remarkable savings. In fact, the application of hydrosoluble material films is instantaneous, while application of the aqueous solution of polyvinyl alcohol and the consequent evaporation of water requires longer time.

The absolute lack of water in the production cycle according to the present invention eliminates risk of damaging the finished product due to the evaporation of the same water during the polymerisation of the binder, that are always present by the spray application of the film.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Process for the production of marble conglomerate slabs, starting from marble sand and/or granulates, additivated with binders, of the kind comprising a step of mixing the raw materials, a step of placing the mixture on a conveyor belt or on moulds, an under vacuum vibro-compaction step and a following step of polymerisation of the binder, plus possible further lapping and finishing steps of the final product, **characterised in that** it further comprises a step of placing a protective sheet on said conveyor belt or on the base of said moulds, before pouring the mixture, and on said mixture, after having poured the same and before covering the mixture with the possible lid of the mould, or in any case before subjecting to the vibro-compaction, said protective sheet being comprised of hydrosoluble plastic material in such a way to coat the mixture above and at the bottom before the vibro-compaction step, said hydrosoluble material sheet being automatically removed, after the binder polymerisation step, from the water of the slab finishing workings.

2. Process for the production of marble conglomerate slabs according to claim 1, **characterised in that** said hydrosoluble material sheet is comprised of a polyvinyl alcohol based thermoplastic material.

3. Process for the production of marble conglomerate slabs according to claim 1, **characterised in that** said process for the production of marble conglomerate slabs comprises the following steps:
- mixing the raw materials;
- placing a hydrosoluble material sheet on the moulds transported on a conveyor belt or directly on the conveyor belt,
- placing a raw material mixture layer having an homogeneous thickness on the hydrosoluble material sheet beforehand arranged,
- placing a further hydrosoluble sheet on the mixture;
- possible covering of the mixture by the mould lid;
- under vacuum vibro-compaction of the mixture,
- polymerisation of the binder by passage in an oven at temperatures ranging between 80° and 120° C,
- cooling the slabs up to room temperature, and
- finishing of the slabs in presence of water, with consequent removal by dissolution of hydrosoluble plastic material protection sheets.

4. Process for the production of marble conglomerate slabs according to claim 1, **characterised in that** all the steps are carried out with temperatures included between the room temperature and the maximum temperature reached within the oven during the polymerisation step.

5. Process for the production of marble conglomerate slabs according to claim 1, **characterised in that** the basis of the moulds that are eventually used can include raised edges having such a measure to correspond to the wished thickness of the produced slabs.

## Patentansprüche

1. Verfahren zur Herstellung von Marmorkonglomerat-Platten, ausgehend von Marmorsand und/oder Granulaten, dem bzw. denen Bindemittel zugegeben wurden, derart, dass es einen Schritt des Mischens der Rohmaterialien, einen Schritt des Platzierens der Mischung auf ein Fließband oder auf Gussformen, einen Vibrationskompaktierungsschritt unter Vakuum und einen folgenden Schritt der Polymerisation des Bindungsmittels, sowie mögliche weitere Polier- und Endbearbeitungsschritte des Endprodukts umfasst, **dadurch gekennzeichnet, dass** es ferner umfasst einen Schritt der Platzierung einer Schutzfolie, wobei die Schutzfolie ein wasserlösliches Kunststoffmaterial umfasst, auf das Fließband oder auf die Basis der Gussformen vor dem Gießen der Mischung und auf die Mischung, nachdem dieselbe gegossen wurde und bevor die Mischung mit einem möglichen Deckel der Gussform bedeckt wurde oder in jedem Fall bevor sie der Vibrationskompaktierung unterworfen wurde, in solcher Weise, dass die Mischung oben und am Boden vor dem Vibrationskompaktierungsschritt bedeckt ist, wobei die Folie aus wasserlöslichem Material automatisch nach dem Bindemittel-Polymerisationsschritt aus dem Wasser der Platten-Endbearbeitungsvorgänge entfernt wird.

2. Verfahren zur Herstellung von Marmorkonglomerat-Platten nach Anspruch 1, **dadurch gekennzeichnet, dass** die Folie aus wasserlöslichem Material ein thermoplastisches Material auf Basis eines Polyvinylalkohols umfasst.

3. Verfahren zur Herstellung von Marmorkonglomerat-Platten nach Anspruch 1, **dadurch gekennzeichnet, dass** das Verfahren zur Herstellung von Marmorkonglomerat-Platten die folgenden Schritte umfasst:
- Mischen der Rohmaterialien;
- Platzieren einer Folie aus wasserlöslichem Material auf die Gussformen, die auf einem Fließband transportiert werden, oder direkt auf das Fließband,
- Platzieren einer Rohmaterialmischungsschicht mit einer homogenen Dicke auf die zuvor angeordnete Folie aus wasserlöslichem Material,
- Platzieren einer weiteren wasserlöslichen Folie auf die Mischung;
- gegebenenfalls Bedecken der Mischung mit dem Gussformdeckel;
- Vibrationskompaktieren der Mischung unter Vakuum,
- Polymerisieren des Bindemittels durch Überführung in einen Ofen bei Temperaturen im Bereich zwischen 80° und 120° C,
- Abkühlen der Platten bis Raumtemperatur, und
- Endbearbeiten der Platten in Anwesenheit von Wasser, mit folglicher Entfernung der Schutzfolien aus wasserlöslichen Kunststoffmaterial durch Auflösung.

4. Verfahren zur Herstellung von Marmorkonglomerat-Platten nach Anspruch 1, **dadurch gekennzeichnet, dass** alle Schritte bei Temperaturen zwischen Raumtemperatur und der Maximaltemperatur, die innerhalb des Ofens während des Polymerisierungsschritts erreicht wird, durchgeführt werden.

5. Verfahren zur Herstellung von Marmorkonglomerat-Platten nach Anspruch 1, **dadurch gekennzeichnet, dass** die Basis der Gussformen, welche schließlich verwendet werden, erhöhte Ränder einschließen kann, die ein solches Maß haben, dass es der gewünschten Dicke der hergestellten Platten entspricht.

## Revendications

1. Procédé de production de dalles de conglomérat de marbre, en partant de sable et/ou de granulats de marbre, auxquels on a ajouté des liants, du type comprenant une étape de mélange des matières premières, une étape de placement du mélange sur une courroie transporteuse ou dans des moules, une étape de vibro-compactage sous vide, et une étape suivante de polymérisation du liant, plus des étapes possibles supplémentaires de polissage et de finition du produit final, **caractérisé en ce qu'**il comprend en outre une étape de placement d'une feuille protectrice sur ladite courroie transporteuse ou sur la base desdits moules, avant de verser le mélange, et sur ledit mélange, et après avoir versé celui-ci et avant de recouvrir le mélange avec le possible couvercle du moule, ou en tout cas avant de le soumettre au vibro-compactage, ladite feuille protectrice étant constituée d'un matériau de plastique hydrosoluble de telle manière qu'il revête le mélange au-dessus et en dessous avant l'étape de vibro-compactage, ladite feuille de matériau hydrosoluble étant automatiquement enlevée, après l'étape de polymérisation du liant, de l'eau des tâches de finition de la dalle.

2. Procédé de production de dalles de conglomérat de marbre selon la revendication 1, **caractérisé en ce que** ladite feuille de matériau hydrosoluble est constituée d'un matériau thermoplastique à base d'alcool polyvinylique.

3. Procédé de production de dalles de conglomérat de marbre selon la revendication 1, **caractérisé en ce que** ledit processus de production de dalles de conglomérat de marbre comprend les étapes suivantes :
- mélange des matières premières ;
- placement d'une feuille de matériau hydrosoluble sur les moules transportés sur une courroie transporteuse ou directement sur la courroie transporteuse,
- placement d'une couche de mélange de matières premières ayant une épaisseur homogène sur la feuille de matériau hydrosoluble préalablement agencée,
- placement d'une autre feuille hydrosoluble sur le mélange ;
- possible recouvrement du mélange par le couvercle du moule;
- vibro-compactage sous vide du mélange,
- polymérisation du liant par passage dans un four à des températures comprises entre 80 et 120 °C,
- refroidissement des dalles jusqu'à la température ambiante, et
- finition des dalles en présence d'eau, avec enlèvement ultérieur par dissolution des feuilles de protection de matériau plastique hydrosoluble.

4. Procédé de production de dalles de conglomérat de marbre selon la revendication 1, **caractérisé en ce que** toutes les étapes sont exécutées avec des températures incluses entre la température ambiante et la température maximum atteinte à l'intérieur du four pendant l'étape de polymérisation.

5. Procédé de production de dalles de conglomérat de marbre selon la revendication 1, **caractérisé en ce que** la base des moules qui sont éventuellement utilisés peut inclure des bords relevés ayant une mesure de façon à correspondre à l'épaisseur souhaitée des dalles produites.
